Europäisches Patentamt

**European Patent Office**

**Office européen des brevets**

(19)

(11) Numéro de publication: **0 098 673**
**A2**

# (12) DEMANDE DE BREVET EUROPEEN

(21) Numéro de dépôt: **83201017.7**

(22) Date de dépôt: **07.07.83**

(51) Int. Cl.³: **A 01 K 1/062**

(30) Priorité: **09.07.82 BE 2059771**

(43) Date de publication de la demande: **18.01.84**
**Bulletin 84/3**

(84) Etats contractants désignés: **AT BE CH DE FR IT LI LU NL SE**

(71) Demandeur: **Vandekeybus, Christiaan Adriaan Corneel, Kloosterstraat 21, B-2190 Essen (BE)**

(72) Inventeur: **Vandekeybus, Christiaan Adriaan Corneel, Kloosterstraat 21, B-2190 Essen (BE)**

(74) Mandataire: **De Rycker, Rudolf, Ir. et al, Vereenigde Octrooibureaux Belgie S.A. Charlottalei 48, B-2018 Antwerpen (BE)**

(54) **Dispositif pour attacher un animal.**

(57)  Le dispositif pour attacher un animal comprend des chaînes (34) auxquelles sont suspendues des parties supérieures (8 et 9) des deux branches (8-6-22-4 et 9-7-22-4) d'un carcan. Ces parties supérieures (8 et 9) sont reliées de façon articulée entre elles au sommet avec un axe d'articulation perpendiculaire au plan de carcan principal défini par ces parties supérieures (8 et 9). Un ressort (44) maintient les parties supérieures (8 et 9) dans leur position parallèle ou dans leur position écartée et un verrou (54) verrouille ces parties supérieures (8 et 9) lorsqu'elles occupent leur position parallèle.

0098673

- 1 -

"Dispositif pour attacher un animal".

L'invention est relative à un dispositif pour attacher un animal, avec
- un élément de suspension à suspendre au sommet à une structure fixe,
- deux branches qui sont suspendues à l'élément de suspension, forment conjointement un carcan et sont chacune constituées par :
  - une partie supérieure qui s'articule dans l'élément de suspension autour d'un axe perpendiculaire au plan de carcan principal, et
  - une partie inférieure qui est reliée par l'intermédiaire d'une première articulation à la partie supérieure,
- des liaisons articulées qui relient les parties inférieures à la structure fixe, articulations et liaisons articulées qui permettent un déplacement dans le plan de carcan principal et hors de celui-ci,
- des moyens qui, dans une première position extrême, maintiennent les parties supérieures en une position de fermeture et, dans l'autre position extrême, maintiennent ces parties supérieures en une position écartée, et
- un verrou qui verrouille les branches en position de fermeture l'une par rapport à l'autre.

Des dispositifs de ce genre sont en particulier destinés à attacher des vaches.

Un dispositif de ce type est connu d'après le brevet belge n° 885.292.

Dans ce dispositif connu, l'élément de suspension est constitué par un ensemble qui s'étend nettement au-dessus des axes d'articulation supérieurs des parties supérieures des branches de carcan, et l'espace entre les parties supérieures ne reste pas libre dans le haut sur une hauteur appréciable, pour l'animal attaché.

L'invention a pour but d'éliminer cet inconvénient et d'offrir une structure compacte, fiable et simple qui, en position de fermeture du carcan, laisse pratiquement toute la hauteur libre pour l'animal lié.

A cette fin, les parties supérieures sont reliées de façon articulée entre elles au sommet, avec un axe d'articulation perpendiculaire au plan de carcan principal.

Un dispositif pour attacher un animal dont les parties supérieures des branches de carcan sont articulées entre elles au sommet, avec un axe d'articulation perpendiculaire au plan de carcan principal, est connu en soi d'après DE-AS-1.218.789.

Ce dispositif connu ne peut cependant pas être amené de l'état ouvert du carcan à l'état fermé sous l'influence de l'animal lui-même. La fermeture du dispositif aussi requiert donc une intervention humaine.

L'invention offre au contraire un dispositif dont les parties supérieures des branches de carcan sont reliées de façon articulée entre elles au-dessus et qui peut cependant encore être doté des moyens nécessaires qui permettent la fermeture du dispositif par l'animal lui-même.

Dans le dispositif connu précité suivant le brevet belge n° 885.292, la fermeture du carcan est provoquée par l'animal parce que ce dernier pousse le carcan suffisamment loin vers la mangeoire qui se trouve de l'autre côté du carcan, par rapport à l'endroit d'arrivée de l'animal. Les avantages précités du dispositif suivant l'invention se font pleinement sentir lorsque l'animal ne doit pousser le dispositif qu'au minimum ou pas du tout vers l'avant pour la fermeture du carcan.

Dans une première forme de réalisation de l'invention, la fermeture du carcan est provoquée par l'animal arrivant sans déplacement du carcan vers la mangeoire ou avec un déplacement minimum dans cette direction, parce que l'animal exerce une poussée vers le bas sur les parties inférieures des branches de carcan.

Dans cette forme de réalisation, les liaisons articulées destinées à relier les parties inférieures à la structure fixe sont constituées par :

- une pièce basse qui forme conjointement avec les branches de carcan, le carcan,
- un lien souple pour relier la pièce basse à la structure fixe, et

- d'autres articulations qui relient la pièce basse aux parties inférieures,

la pièce basse est un carcan bas et, en position d'ouverture de carcan, la partie inférieure s'étend par une portion vers le bas dans la direction de l'autre branche jusqu'au-delà d'une portion de l'autre articulation qui forme la liaison avec la pièce basse.

Cette forme de réalisation de l'invention permet donc une fermeture par l'animal parce que ce dernier exerce une poussée vers le bas sur des parties du dispositif, tandis que la fermeture du dispositif suivant le brevet belge n° 885.292 est provoquée par le fait que l'animal repousse les branches de carcan vers l'avant, dans la direction de la mangeoire.

Dans une forme de réalisation avantageuse de l'invention, la partie inférieure est constituée par :

- une partie basse qui est reliée par l'intermédiaire d'une seconde articulation, dont l'axe se situe dans le plan de carcan principal, à la pièce basse, et

- une autre partie qui forme la partie médiane de la branche et est reliée par l'intermédiaire de la première

- 4 -

articulation à la partie supérieure et par l'intermédiaire d'une troisième articulation, dont l'axe est perpendiculaire au plan de carcan principal, à la partie basse,

et dans la position ouverte du carcan, la partie médiane s'étend vers le bas, dans la direction de l'autre branche, jusqu'au-delà de la troisième articulation.

Dans une autre forme de réalisation de l'invention, la fermeture du carcan est provoquée par l'animal arrivant sans ou avec une poussée minime vers l'avant du carcan, parce que l'animal agit sur un organe de commande.

Dans cette forme de réalisation, le dispositif comporte un organe de commande qui est relié par une liaison mécanique aux parties supérieures et s'articule autour d'un axe parallèle au plan de carcan, entre une première position dans laquelle il maintient les parties supérieures mutuellement écartées, par l'intermédiaire de cette liaison mécanique, et il ferme partiellement l'espace entre les parties supérieures, et une seconde position dans laquelle il maintient les parties supérieures dans une position mutuellement parallèle, par l'intermédiaire de cette liaison mécanique.

Un dispositif pour attacher un animal avec un organe de commande agissant par l'intermédiare d'une liaison mécanique sur les parties supérieures des branches d'un carcan et qui, dans la position où il maintient mutuellement écartées ces parties supérieures, ferme partiellement l'espace entre les parties supérieures,est connu en soi d'après DE-A-28 45 521. Ce dispositif connu offre cependant notamment l'inconvénient que sa suspension exige encore une assez grande hauteur au-dessus des extrémités supérieures des branches de carcan, ce qui est éliminé suivant l'invention, entre autres, parce que les parties supérieures sont articulées entre elles au sommet avec un axe d'articulation qui est perpendiculaire au plan de carcan principal,de telle sorte que la suspension peut avoir lieu soit par l'intermédiaire de cet axe d'articulation, soit directement au moyen des parties supérieures des branches de carcan.

Avec le dispositif suivant le brevet belge n° 885.292 et d'autres dispositifs connus, les moyens qui, dans une position extrême, maintiennent en position de fermeture les parties supérieures des branches de carcan et, dans l'autre position extrême, les maintiennent en une position écartée, sont constitués par un ressort de traction qui se situe dans une position extrême en dessous des axes d'articulation et, dans l'autre position extrême, au-dessus de ces axes d'articulation. Lorsqu'avec un tel dispositif on rend ajustable l'espacement entre les branches de carcan, afin que le dispositif puisse être utilisé pour des animaux plus petits et plus larges, la force de traction exercée par le ressort varie en fonction du réglage choisi, qui consiste dans les dispositifs connus, à déplacer les axes d'articulation des parties supérieures des branches de carcan par rapport à l'élément de suspension.

Le dispositif suivant l'invention permet différents réglages des parties supérieures des branches de carcan qui tiennent compte de la largeur de l'animal à attacher, tout en permettant encore avec un seul et même ressort, de laisser s'exercer une même force de traction aussi bien en position ouverte qu'en position fermée du carcan.

A cette fin, les parties supérieures sont reliées de façon articulée entre elles au sommet par un axe d'articulation qui est fixe par rapport à une plaque de support qui est montée de façon ajustable par rapport à l'une des parties supérieures, dotée de plusieurs ouvertures pour l'axe d'articulation, et les moyens qui, dans une position extrême, maintiennent les parties supérieures à leur position de fermeture et, dans l'autre position extrême, les maintiennent à leur position écartée, comprennent un ressort de traction dont une extrémité est

- 6 -

reliée à la plaque de support et l'autre extrémité à l'autre partie supérieure, ressort de traction dont la ligne de centre dans une position extrême des parties supérieures, se situe au-dessus de l'axe d'articulation et, dans l'autre position extrême des parties supérieures, en dessous de cet axe d'articulation.

L'angle qui est formé par les parties supérieures quand elles prennent leur position écartée, est indépendant de l'ajustage qui tient compte de la largeur de l'animal à attacher, lorsque la plaque de support et l'autre partie supérieure possèdent chacune une butée, ces butées se rencontrant en position d'ouverture du carcan.

D'autres particularités et avantages de l'invention ressortiront de la description ci-après de deux dispositifs pour attacher un animal suivant l'invention; cette description est uniquement donnée comme exemple, et ne limite pas l'invention; les chiffres de référence concernent les dessins annexés.

La figure 1 est une vue en élévation frontale d'un dispositif pour attacher un animal suivant l'invention, le carcan étant représenté à l'état fermé.

La figure 2 est une vue en élévation frontale d'une partie du dispositif suivant la figure 1, à plus grande échelle et avec le carcan représenté à l'état fermé.

La figure 3 est une vue en élévation frontale d'une partie du dispositif suivant les figures précédentes, à encore plus grande échelle et avec le carcan représenté à l'état fermé.

La figure 4 est une vue en élévation dorsale d'une partie du dispositif suivant les figures précédentes, à l'échelle de la figure 2 et avec le carcan représente à l'état fermé.

La figure 5 est une vue en élévation frontale du dispositif suivant les figures précédentes, à l'échelle de la figure 1 et avec le carcan représenté à l'état ouvert.

La figure 6 est une vue en élévation frontale d'une partie du dispositif suivant les figures précédentes, à l'échelle de la figure 2 et avec le carcan représenté à l'état ouvert.

La figure 7 est une vue en élévation frontale d'une partie du dispositif suivant les figures précédentes, à l'échelle de la figure 3 et avec le carcan représenté à l'état ouvert.

La figure 8 est une vue en élévation latérale d'une partie du dispositif suivant les figures précédentes, à l'échelle de la figure 2 et avec le carcan représenté à l'état fermé.

La figure 9 est une vue de dessus d'une partie du dispositif suivant les figures précédentes, à l'échelle de la figure 3 et avec le carcan représenté à l'état fermé.

La figure 10 est une vue en élévation dorsale d'un élément du dispositif suivant les figures précédentes.

La figure 11 est une vue de dessus de l'élément de la figure 10.

La figure 12 est une vue de dessus d'un organe de commande qui peut être utilisé en combinaison avec le dispositif des figures précédentes.

La figure 13 est une vue en élévation frontale de l'organe de commande de la figure 12.

La figure 14 est une vue en élévation latérale de l'organe de commande des figures 12 et 13.

La figure 15 est une vue en élévation frontale d'un second dispositif pour attacher un animal suivant l'invention, le carcan étant représenté à l'état fermé.

La figure 16 est une vue en élévation dorsale et à plus grande échelle d'une partie du dispositif suivant la figure 15, le carcan étant également représenté à l'état fermé.

La figure 17 est une vue en élévation latérale,

- 8 -

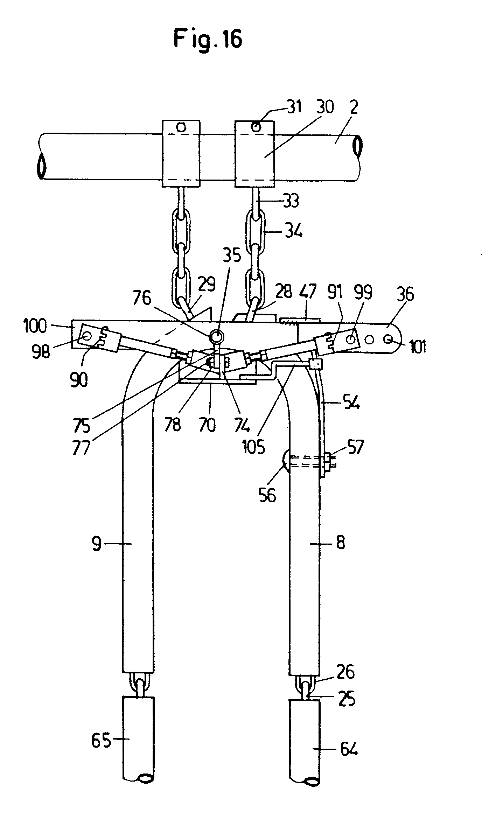

à l'échelle de la figure 16, de la partie du dispositif suivant cette figure, le carcan étant également représenté à l'état fermé et, dans un but de clarté, quelques éléments n'étant pas représentés.

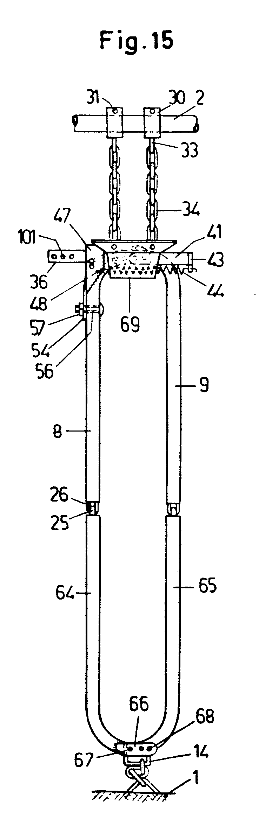

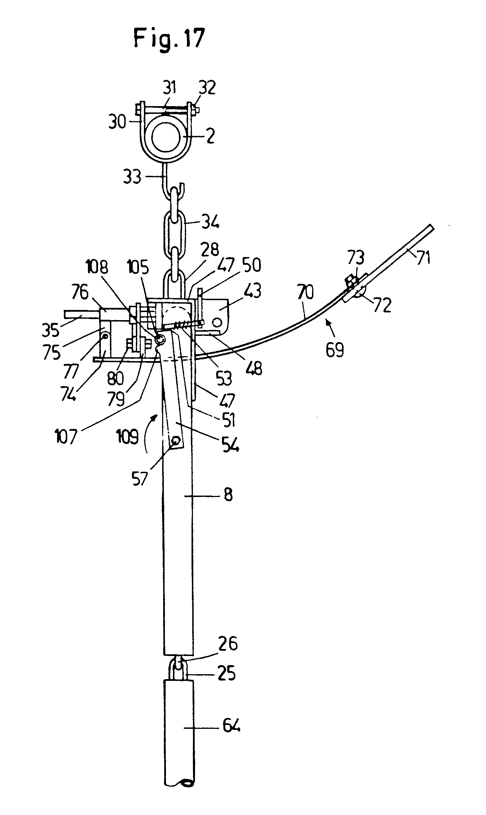

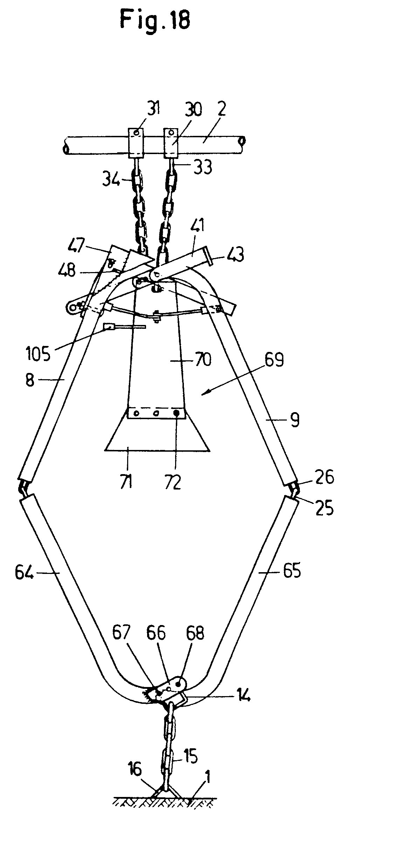

La figure 18 est une vue en élévation frontale du dispositif suivant les figures 15 à 17, à l'échelle de la figure 15, en éliminant certains éléments, le carcan étant représenté à l'état ouvert.

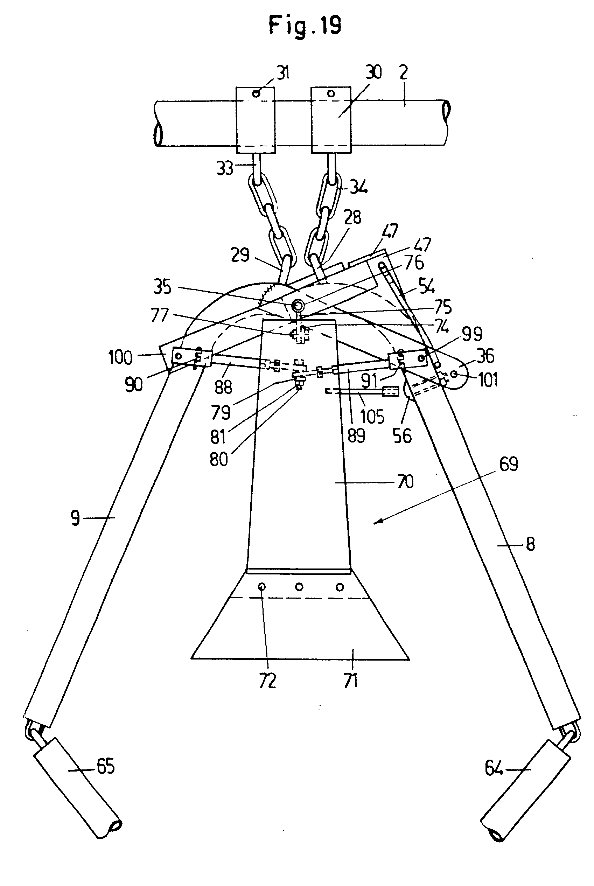

La figure 19 est une vue en élévation dorsale à plus grande échelle d'une partie du dispositif suivant les figures 15 à 18, le carcan étant représenté à l'état ouvert et, dans un but de clarté, certains éléments n'étant pas représentés.

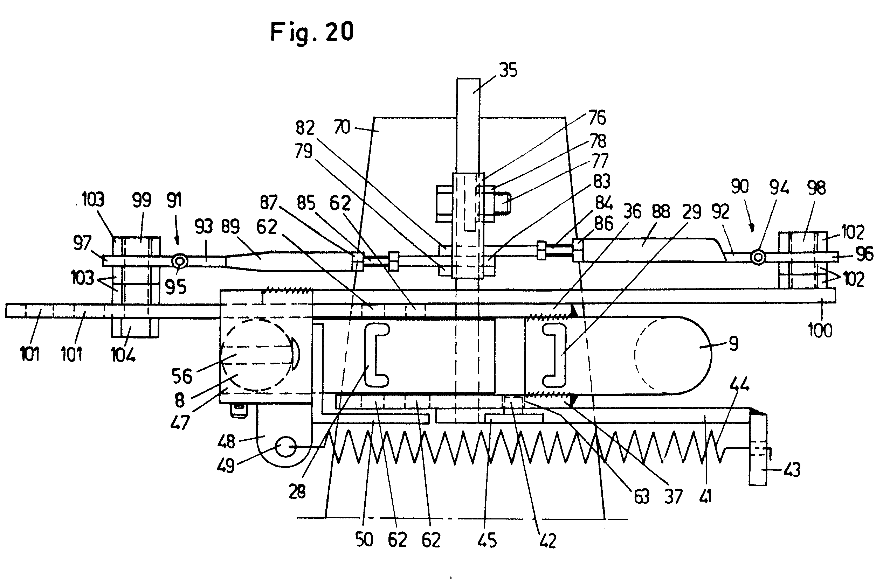

La figure 20 est une vue de dessus à encore plus grande échelle d'une partie du dispositif des figures 15 à 19, le carcan étant représenté à l'état fermé.

Dans les diverses figures, des références identiques désignent les mêmes éléments.

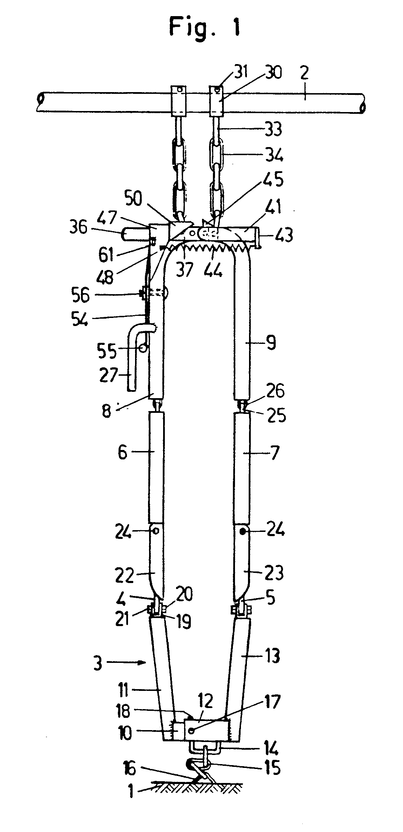

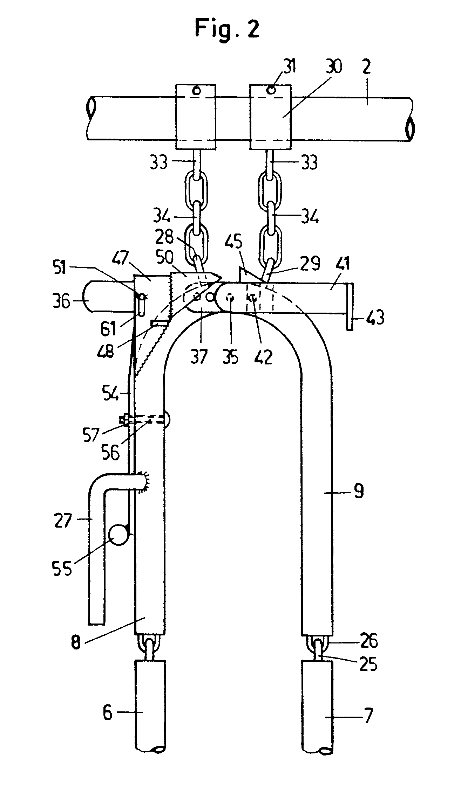

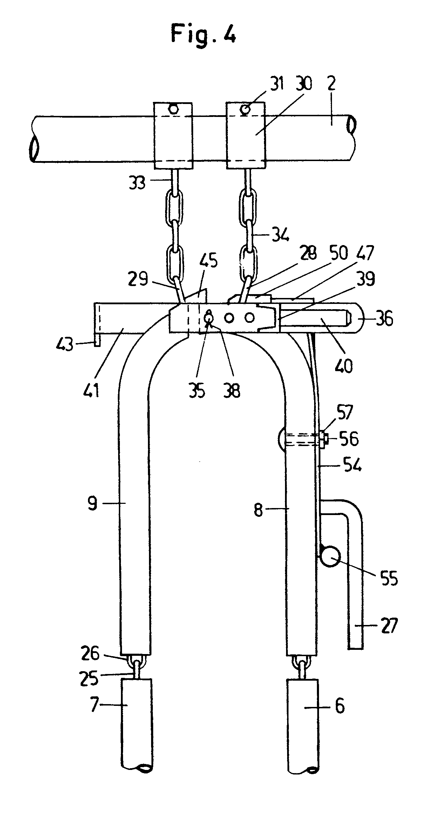

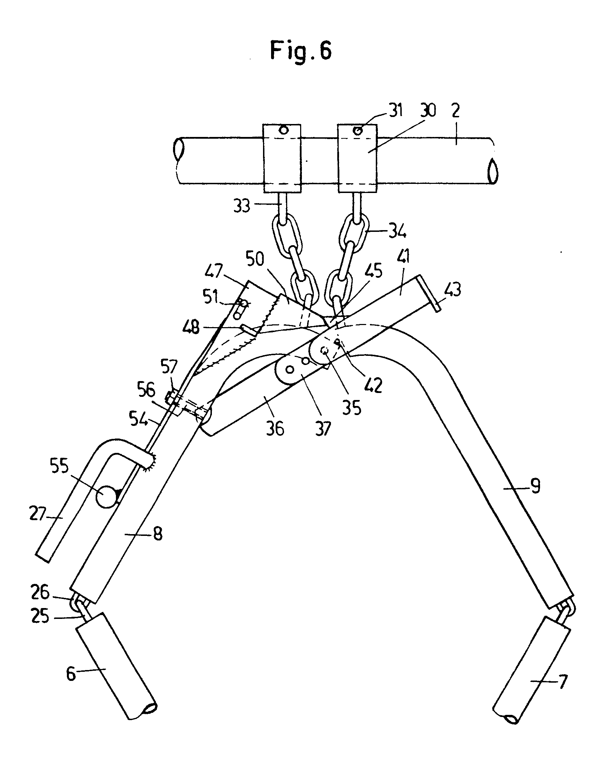

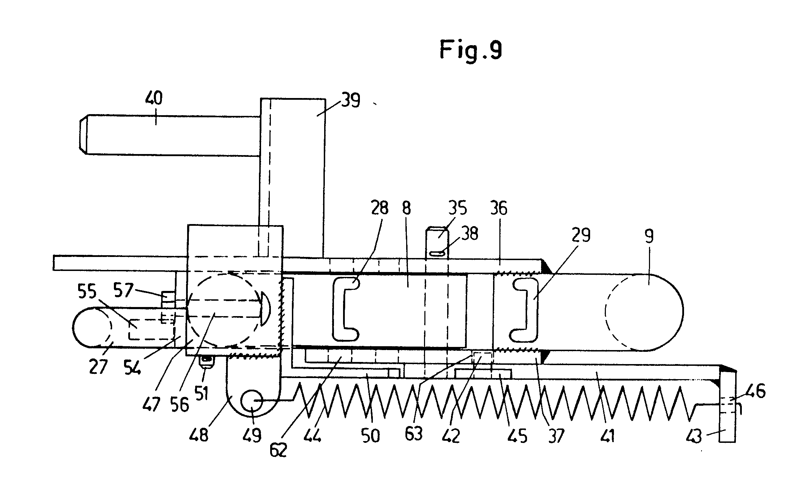

Le dispositif représenté aux figures 1 à 11 pour attacher un animal est monté à l'intérieur d'une structure fixe à laquelle appartiennent le plancher 1 et la poutre supérieure 2.

Ce dispositif est destiné à attacher une vache dans une station couché-et-debout. La direction transversale de cette dernière correspond à la direction de la poutre 2. La direction longitudinale y est perpendiculaire. C'est la direction qui est suivie par l'animal lorsqu'il pénètre normalement dans la station couché-et-debout. Le dispositif est constitué essentiellement par un carcan qui est lui-même constitué par un carcan bas 3 et des branches de carcan s'y raccordant. Chaque branche de carcan comprend une partie supérieure 8 et 9, et une partie inférieure 6-22-4 et 7-23-5. Ces parties sont reliées de façon articulée entre elles, ainsi qu'aux chaînes de suspension 34 et au carcan bas 3, d'une manière décrite plus en détails ci-après.

Au repos, ces parties se trouvent dans un même plan, dit plan de carcan principal. Que le dispositif se trouve à l'état ouvert ou fermé, comme décrit ci-après, en équilibre l'ensemble du dispositif se place en tout cas avec le plan principal de carcan suivant une direction qui correspond à la direction transversale de la station couché-et-debout.

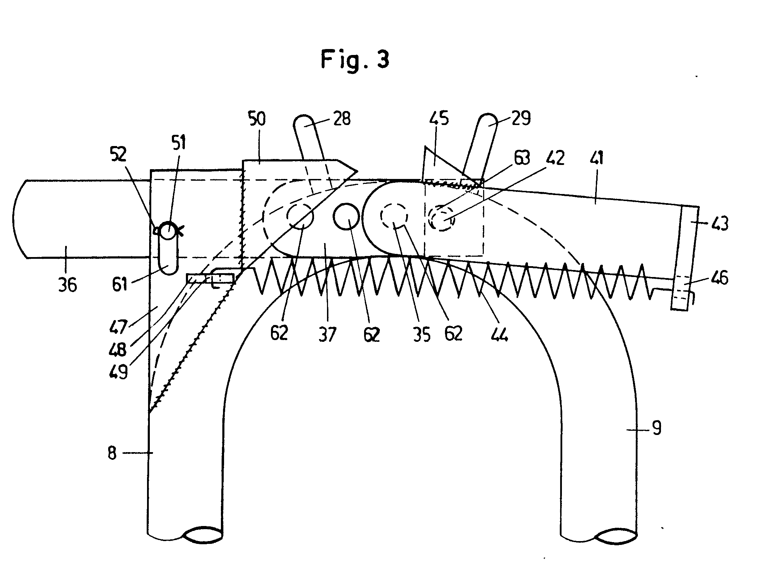

Sur un côté du dispositif s'étendant au repos suivant la direction transversale de la station couché-et-debout, dit ci-après côté avant, cette station possède une mangeoire. L'autre côté du dispositif est donc dénommé le côté arrière. Les parties supérieures 8 et 9 possèdent chacune au sommet un oeillet 28 et 29. Lorsque le carcan pend au repos, les oeillets 28 et 29 sont perpendiculaires au plan de carcan principal. Lorsque le carcan est en outre à l'état fermé, les oeillets 28 et 29 divergent de bas en haut, comme il ressort principalement de la figure 3.

Pour la suspension du carcan, sur la poutre transversale 2 sont situés deux petits étriers de fixation 30 qui sont maintenus sur cette poutre par des boulons 31 avec des écrous 32. Les étriers de fixation 30 portent par-dessous des crochets 33 auxquels sont suspendues les chaînes 34 qui sont à leur tour reliées aux oeillets 28 et 29. Etant donné que les chaînes 34 sont des éléments de suspension souples, elles cherchent sous l'influence de leur propre poids et du carcan qui y est pendu, la position dans laquelle leurs lignes de centre sont parallèles entre elles. Au repos, ces lignes de centre définissent un plan vertical qui s'étend parallèlement à la poutre supérieure 2, c'est-à-dire suivant la direction transversale de la station couché-et-debout. Etant donné que les oeillets 28 et 29 qui engagent les chaînes 34 sont perpendiculaires au plan de carcan principal, les parties supérieures 8 et 9 du carcan se situeront dans un plan transversal vertical, donc parallèle à la poutre supérieure 2, lorsque les chaînes s'étendent dans un tel plan. Sous l'influence de l'animal, le carcan et donc les parties de carcan 8 et 9 peuvent être amenés hors du plan transversal,mais dès que la force de la pesanteur peut agir librement, le carcan reviendra dans le plan transversal.

Le carcan bas 3 est constitué par deux branches 11 et 13 qui sont chacune solidaires d'une partie de base 10 et 12. Ces dernières sont des fers cornières qui s'engagent au-dessus par leurs portions horizontales et en dessous par leurs portions verticales. Dans la portion horizontale et la portion verticale de la partie de base 12 est pratiquée une ouverture. Dans les parties correspondantes de la partie de base 10 sont pratiquées des ouvertures en plus grand nombre. Des boulons 17 et 18 peuvent donc relier entre elles les parties de base 10 et 12 en différentes positions mutuelles, de telle sorte que l'espacement entre les branches 11 et 13 du carcan bas est ajustable.

Sur le bord inférieur du fer cornière 12 est soudé un oeillet 14 qui est relié par une chaîne 15 à un oeillet 16 qui est encastré dans le plancher 1.

Le dispositif est donc monté entre la poutre supérieure 2 et le plancher 1, par l'intermédiaire de chaînes 15 et 34. Lorsque le carcan prend la position de fermeture illustrée à la figure 1, la chaîne 15 pend de façon lâche, ce qui rend possible dans certaines limites le mouvement de l'animal. Si l'on veut limiter cette possibilité de mouvement, on peut relier au sommet des maillons des chaînes 34 qui ne sont pas adjacents, directement entre eux, par exemple avec un simple crochet, ce qui réduit le jeu dans la suspension.

Lorsque le carcan prend la position ouverte

- 11 -

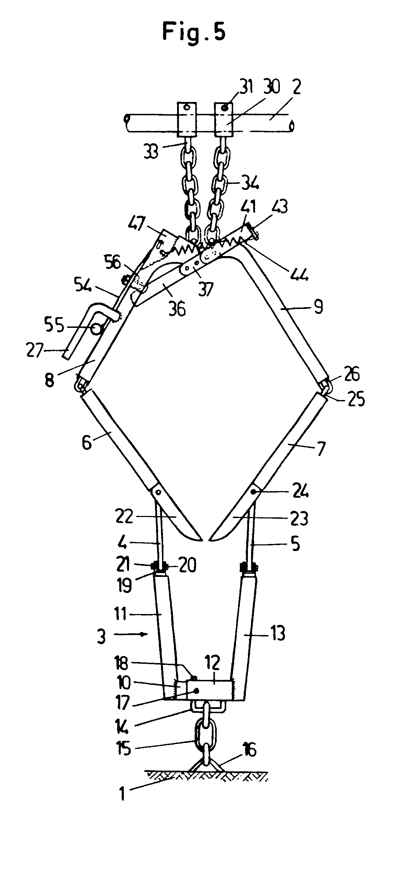

illustrée à la figure 5, les chaînes 34 et 15 sont tendues, de telle sorte que la possibilité de mouvement du dispositif ouvert est négligeable.

Les directions indiquées ci-après des différents éléments constitutifs qui relient entre elles les parties de carcan, se réfèrent à l'état d'équilibre du plan de carcan principal, c'est-à-dire le plan transversal de la station debout-et-couché dans lequel se situent notamment les parties de carcan 11,4,22,6,8 et 13,5,23,7,9 lorsque le dispositif pend en équilibre à l'état fermé.

D'une façon décrite plus en détails ci-après, les parties supérieures 8 et 9 sont reliées entre elles par une goupille 35 qui forme un axe d'articulation et est perpendiculaire au plan de carcan principal.

A leurs extrémités inférieures, les parties supérieures 8 et 9 des branches de carcan portent des oeillets 26 situés dans le plan de carcan principal. Dans les oeillets 26 s'engagent des oeillets 25 des extrémités supérieures des parties médianes 6 et 7. Ces oeillets sont perpendiculaires au plan de carcan principal et donc parallèles au plan de symétrie longitudinal vertical de la station couché-et-debout.

Chacune des parties médianes 6 et 7 qui sont reliées par les premières articulations 25-26 aux parties supérieures 8 et 9, est prolongée par un butoir 22,23 solidaire de la partie médiane.

Des parties basses 4 et 5 se situent entre les parties médianes 6 et 7 et les branches 11 et 13 du carcan bas 3. Chaque partie basse 4,5 est articulée, d'une part, sur une partie médiane 6,7 et, d'autre part, sur une branche 11,13 du carcan bas 3, au moyen d'articulations qui ne permettent qu'un simple mouvement de charnière.

Une seconde articulation qui forme la liaison entre la partie basse 4,5 et les branches de carcan 11,13 présente son axe d'articulation dans le plan de carcan principal.

- 12 -

Cette seconde articulation possède en tant que goupille d'articulation, un boulon 20 qui est supporté dans les deux branches dirigées vers le haut de la pièce 19 à section transversale en U qui est soudée sur l'extrémité supérieure d'une branche 11,13 du carcan bas 3. Le boulon traverse une ouverture qui est pratiquée dans ce but dans la partie basse 4,5. A l'extérieur des pièces en U 19 se situent d'un côté la tête du boulon 20 et de l'autre côté un écrou 21. Les branches 11 et 13 du carcan bas 3, les parties médianes 6 et 7 et les parties supérieures 8 et 9 des branches de carcan principal sont des tubes ronds. Les parties basses 4 et 5 des branches de carcan principal sont des barres à section transversale rectangulaire.

Chaque partie médiane 6,7 est reliée à une partie supérieure 8,9 par la première articulation 25-26 précitée et à une partie basse 4,5 par une troisième articulation. L'axe de la troisième articulation est perpendiculaire au plan de carcan principal. Chaque troisième articulation possède en tant que goupille d'articulation, un boulon 24 qui est supporté dans un butoir 22,23 qui est solidaire d'une partie médiane 6,7. La goupille 24 traverse une ouverture qui est pratiquée au sommet dans la partie basse 4,5. A l'état fermé du carcan, les butoirs 22 et 23 enferment les parties basses 4,5. L'animal attaché dans le carcan peut bien alors pousser vers l'avant les parties médianes 6 et 7 et donc provoquer un mouvement de pivotement des parties médianes 6,7 conjointement avec les parties basses 4,5 autour des goupilles d'articulation 20,mais pour l'animal attaché, un mouvement de pivotement à hauteur des goupilles d'articulation 24 est pratiquement exclu même dans la direction perpendiculaire au plan de carcan principal, même s'il devait y avoir un certain jeu dans les articulations avec les goupilles 24.

Les parties supérieures 8 et 9 présentent en haut

- 13 -

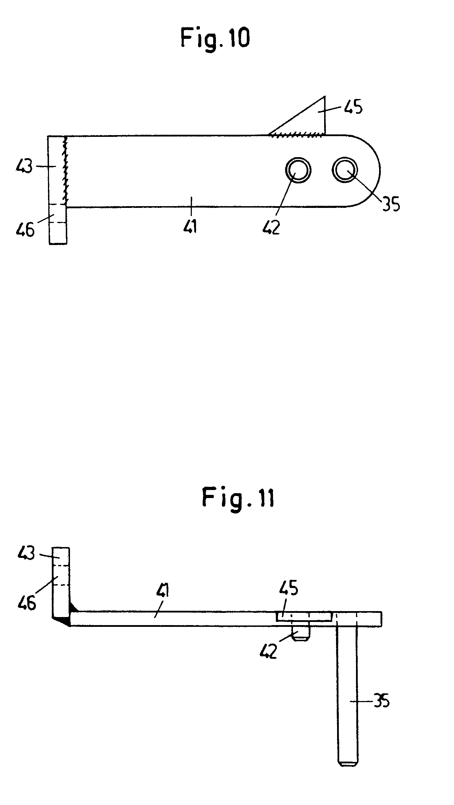

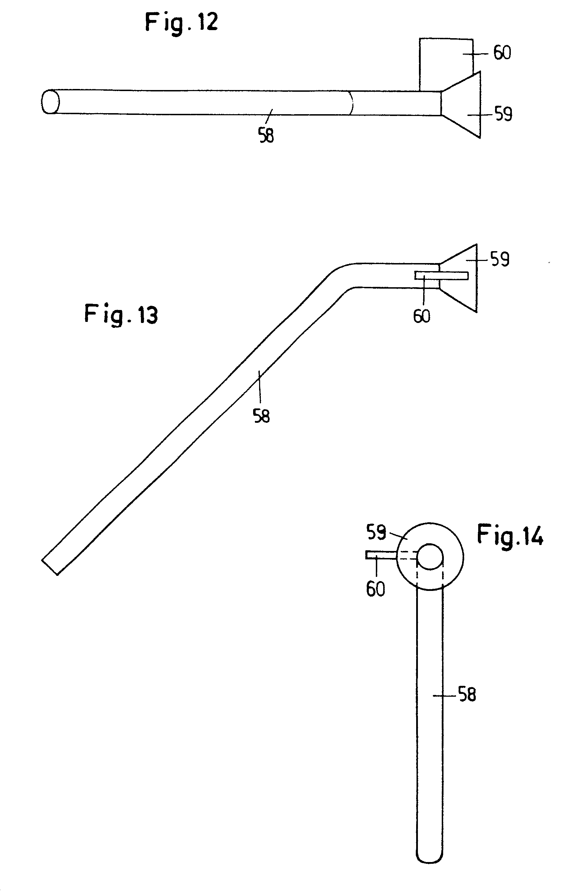

des portions incurvées dirigées l'une vers l'autre. La portion incurvée de la partie supérieure 8 est nettement plus longue que celle de la partie supérieure 9, mais la portion incurvée de cette partie supérieure 9 est prolongée par deux flasques 36 et 37 entre lesquels vient se loger la portion incurvée de la partie supérieure 8. Dans la portion incurvée de la partie supérieure 8 est pratiquée une ouverture pour la goupille 35 qui forme l'axe d'articulation de la partie supérieure 8 par rapport à la partie supérieure 9. Dans les flasques 36 et 37 sont pratiquées en face les unes des autres, trois ouvertures semblables 62, de telle sorte que la goupille 35 peut relier entre elles de façon articulée les parties supérieures 8 et 9 dans trois positions différentes. En outre on a encore pratiqué dans le flasque 37 une quatrième ouverture 63 sur le côté opposé à la partie supérieure 8, au-delà des trois ouvertures 62. Les trois ouvertures 62 dans le flasque 36 et les quatre ouvertures 62 et 63 dans le flasque 37 sont équidistantes entre elles. Une plaque de support, illustrée séparément aux figures 10 et 11, présente deux goupilles s'y élevant perpendiculairement, à savoir la goupille 35 formant l'axe d'articulation des parties supérieures 8 et 9, et une seconde goupille 42. L'espacement entre les lignes de centre des goupilles 35 et 42 est égal à l'espacement entre des ouvertures 62 et 63 adjacentes. La seconde goupille 42 est nettement plus courte que la goupille 35 et elle est aussi nettement plus mince. La goupille 35 formant l'axe d'articulation entre les parties supérieures 8 et 9 doit en effet pénétrer à partir de la plaque de support 41 à travers le flasque 37 et la partie supérieure 8 dans le flasque 36, tandis que la goupille 42 pénètre simplement à partir de la plaque de support 41 dans une ouverture 62 ou 63 pratiquée dans le flasque 37. La goupille 35 fait en fait encore saillie hors du flasque 36 et y est retenue par une goupille fendue 38.

- 14 -

A l'extrémité opposée aux goupilles 35 et 42, la plaque de support 41 possède une plaquette 43 dans laquelle est pratiquée une ouverture 46 pour la fixation de l'extrémité d'un ressort de traction 44. Sur son bord supérieur, la plaque de support 41 possède une butée 45.

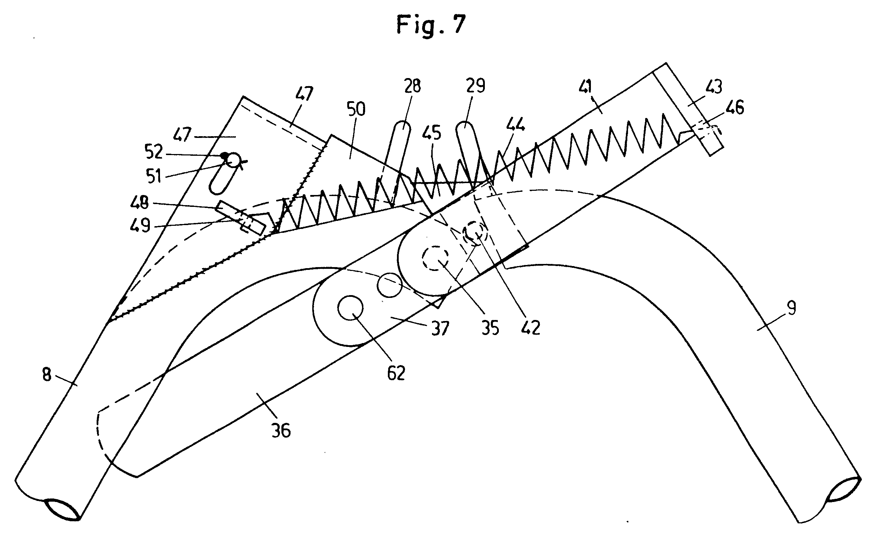

Sur la partie supérieure 8, donc celle par rapport à laquelle n'est pas montée la plaque de support 41, est soudée une pièce 47 avec une partie horizontale et une partie verticale. La pièce 47 porte une plaquette 48 dans laquelle est pratiquée une ouverture 49 pour la fixation de l'autre extrémité du ressort 44. Le ressort de traction 44 tire donc d'une part sur la pièce 47 qui est solidaire de la partie supérieure 8 et, d'autre part, sur la plaque de support 41 qui est montée par rapport à la partie supérieure 9. Ainsi qu'il ressort en particulier de la figure 3, dans l'état fermé du carcan, le ressort 44 se situe complètement en dessous de l'axe d'articulation 35 des parties supérieures 8 et 9. Comme il ressort surtout de la figure 7, dans l'état écarté du carcan, le ressort 44 se situe complètement au-dessus de l'axe d'articulation 35 des parties supérieures 8 et 9.

Lorsque la ligne de centre du ressort 44 passe par la ligne de centre de la goupille d'articulation 35, le ressort se trouve au point mort où il ne tire les parties supérieures 8 et 9 ni vers la position de fermeture, ni vers celle d'écartement. Dans une position supérieure du ressort 44 par rapport à l'axe d'articulation 35, il tire les parties supérieures 8 et 9 vers leur position d'écartement. Dans une position inférieure du ressort 44 par rapport à l'axe d'articulation 35, il tire les parties supérieures 8 et 9 vers leur position de fermeture.

Sur la pièce 47 qui est elle-même fixe par rapport à la partie supérieure 8, est soudée une butée 50. Cette dernière rencontre la butée 45 quand le carcan est en position d'écartement, comme il ressort en particulier de la figure 7.

Les butées 45 et 50 définissent donc la position d'ouverture extrême du carcan.

A l'état fermé du carcan, le flasque 36 fixe par rapport à la partie supérieure 9 rencontre la face inférieure de la portion horizontale de la pièce 47 qui est à son tour fixe sur la partie supérieure 8. La position de fermeture extrême à laquelle le ressort 44 tire les parties supérieures 8 et 9, est donc définie par le flasque 36 et une pièce 47 qui agissent comme butées pour la position de fermeture.

Aux figures, les branches de carcan ont été représentées, aussi bien pour l'état fermé que pour l'état ouvert, dans la position qu'elles prennent pour les plus petits animaux. La goupille 35 se trouve alors dans les ouvertures 62 des flasques 36 et 37 qui sont les plus proches de la partie supérieure 9. La seconde goupille 42 se situe alors dans l'ouverture 63. Etant donné que la section transversale de la seconde goupille 42 est inférieure à celle de l'ouverture 63, le ressort 44 tire en position de fermeture du carcan, la pièce de support 41 quelque peu vers le bas par rapport aux flasques 36 et 37, de telle sorte que le ressort 44 vient se situer encore un peu plus loin en dessous de son point mort que ce ne serait le cas si la pièce de support 41 était exactement dans le prolongement des flasques 36 et 37. Ceci contribue à maintenir les parties supérieures 8 et 9 plus fermement dans leur état fermé.

Lorsque le dispositif n'est pas destiné aux plus petits animaux possible, l'axe d'articulation ou première goupille 35 ne se trouve pas dans les ouvertures 62 les plus proches de la partie supérieure 9, mais bien dans l'une des autres paires d'ouvertures 62. La seconde goupille 42 se trouve alors dans une ouverture 62 du flasque 37, mais ceci ne change rien au fonctionnement décrit ci-avant.

- 16 -

Il est à remarquer que n'importe dans laquelle des ouvertures 62 se trouve la première goupille 35, la plaque de support 41 demeure toujours montée de la même façon par rapport à la partie supérieure 8, de sorte que pour l'ouverture et la fermeture du carcan le ressort 44 exerce toujours la même force et les butées 45 et 50 définissent toujours de la même façon la position écartée des parties supérieures 8 et 9.

Le verrou possède comme corps principal une latte recourbée 54 qui s'étend à côté de la partie supérieure 8 et s'articule par rapport à cette dernière autour d'un boulon 56 qui s'étend suivant le plan de carcan principal. Le boulon 56 traverse la partie supérieure 8, rencontre celle-ci par sa tête d'un côté et porte à son autre extrémité un écrou 57 qui maintient la latte 54 contre la partie supérieure 8.

La latte 54 est quelque peu courbée vers l'intérieur en haut, jusque derrière la partie verticale de la pièce 47. En cet endroit la latte 54 porte une saillie 51 qui traverse une fente 61 pratiquée dans la partie verticale de la pièce 47. Sur le côté avant, une goupille fendue 52 traverse la saillie 51, ce qui empêche que cette dernière soit tirée hors de la fente 61 vers l'arrière de la partie verticale de la pièce 47. Sur la face arrière de la pièce 47, autour de la saillie 51, se trouve un ressort 53 qui repousse la partie supérieure du corps principal 54 du verrou vers l'arrière. En dessous, le corps principal 54 du verrou porte un appui-pouce 55. Ce dernier se situe au voisinage de la poignée 27 qui est soudée sur la partie supérieure 8.

A l'état ouvert du carcan, le ressort 53 repousse l'extrémité supérieure du corps principal 54 du verrou au maximum vers l'arrière, de telle sorte que la goupille fendue 52 rencontre la pièce 47. Lorsque cependant le carcan passe de l'état ouvert à l'état fermé, le flasque

- 17 -

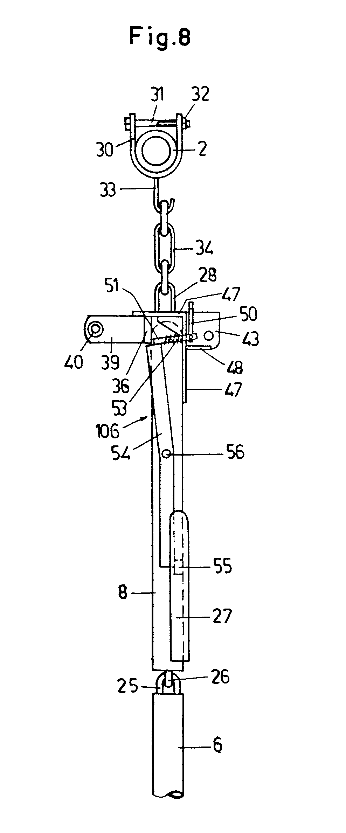

36 repousse la partie du corps principal 54 située au-dessus du boulon 56 vers l'avant, grâce à la forme recourbée de ce corps principal qui ressort surtout de la figure 8. Lorsque le flasque 36 a cependant atteint, à l'état totalement fermé du carcan, sa position la plus haute, il ne retient plus le corps principal 54 du verrou, de telle sorte que le ressort 53 peut exercer son action et l'extrémité supérieure du corps principal 54 parvient sous le flasque 36 et par conséquent elle empêche que le flasque 36 soit à nouveau déplacé vers le bas avec l'extrémité opposée à la partie supérieure 9.

Le carcan peut être ouvert de deux façons différentes, à savoir à la main et par l'intermédiaire de l'organe de commande illustré aux figures 12 à 14.

Pour l'ouverture à la main, on saisit fermement la poignée 27 et on exerce une pression sur l'appui-pouce 55 à l'encontre de l'action du ressort 53. De ce fait, le corps principal 54 subit un mouvement de pivotement limité dans le sens de la flèche 106 à la figure 8. Le corps principal 54 du verrou se retire alors de dessous le flasque 36, de telle sorte qu'on peut alors exercer une traction à la main sur la poignée 27 et par conséquent sur la partie supérieure 8, ce qui écarte cette dernière de la partie supérieure 9 et amène donc finalement le carcan à la position ouverte. La partie supérieure 8 peut être écartée de la partie supérieure 9 autour de la goupille d'articulation 35 jusqu'à ce que les butées 45 et 50 se rencontrent. Dès que lors de ce déplacement, le ressort 44 est passé au-dessus de l'axe d'articulation 35, il contribue à effectuer et maintenir l'ouverture du carcan.

Le flasque 36 qui est fixe par rapport à la partie supérieure 9, porte aussi une poignée 40. Cette dernière qui n'est cependant pas commandée directement à la main, est fixée sur le flasque 36 par l'intermédiaire d'un séparateur 39. L'organe de commande suivant les figures 12 à

- 18 -

14 est constitué par un manche coudé 58 qui porte d'un côté un entonnoir 59. Sur la face extérieure de ce dernier se trouve une plaquette 60.

Pour ouvrir le dispositif, on peut saisir l'organe de commande par le manche 58, sur le côté opposé à l'entonnoir 59, et enfiler ce dernier autour de la poignée 40. Lorsqu'on fait ensuite tourner le manche, on peut amener la plaquette à engager la partie du corps principal 54 du verrou qui se trouve au-dessus du boulon 56. On peut donc repousser avec la plaquette 60 le corps principal 54 à l'encontre de l'action du ressort 53, de telle sorte que le dispositif est déverrouillé et ensuite repousser le manche 58 vers le bas, pendant que la plaquette 60 engage la face inférieure du flasque 36. On repousse ainsi la partie supérieure 9 par rapport à laquelle est fixé le flasque 36, de la partie supérieure 8 et on ouvre le carcan.

Le fonctionnement du dispositif est le suivant.

L'animal qui pénètre dans la station couché-et-debout, se dirige vers la nourriture dans la mangeoire et rencontre entre cette dernière et lui-même, le carcan ouvert qui s'étend suivant la direction transversale de la station couché-et-debout, à l'état ouvert illustré aux figures 5 à 7. L'animal qui veut atteindre la nourriture, passe la tête dans l'ouverture entre les parties médianes 6 et 7 et pousse ainsi sur les butoirs 22 et 23, ce qui les écarte l'un de l'autre et rapproche par conséquent les portions 6 et 7 au-dessus des goupilles d'articulation 24. De ce fait, les parties supérieures 8 et 9 se rapprochent aussi, ce qui amène à un moment donné le ressort 44 en dessous de l'axe d'articulation 35, de telle sorte que ce ressort 44 peut lui-même provoquer la poursuite de la fermeture. Quand les parties 8 et 9 sont parvenues en position de fermeture, la plaque de support 41 se déplacera encore un peu vers le bas pour parvenir à la position suivant la figure 3, à cause du jeu de la seconde goupille 42 dans son ouverture. Comme indiqué précédemment, le corps principal 54 du verrou passe alors en dessous du flasque 36, ce qui verrouille le dispositif à l'état fermé. Pour ouvrir le carcan, on effectue les opérations décrites ci-dessus, soit en agissant à la main sur l'appui-pouce 55 et la poignée 27 et en écartant la partie supérieure 8 de la partie supérieure 9, soit en provoquant à l'aide de l'organe de commande suivant les figures 12 à 14, le déverrouillage et en tirant la partie supérieure 9 de la partie supérieure 8.

Il convient de remarquer que le verrou agit sur le flasque 36 à une grande distance de l'axe 35, ce qui favorise le verrouillage.

La forme de réalisation suivant les figures 15 à 20 diffère essentiellement de celle suivant les figures 1 à 11 par les éléments qui provoquent, sous l'action de l'animal, la fermeture du carcan. Seuls ces éléments seront décrits ci-après.

Dans la forme de réalisation suivant les figures 15 à 20, le carcan bas 3 fait défaut et les parties inférieures constituées par les parties médianes 6 et 7, le butoirs 22 et 23 les prolongeant et les parties basses 4 et 5 sont remplacées par de simples parties inférieures 64 et 65.

Les parties inférieures 64 et 65 portent au-dessus, des oeillets 25 qui s'engagent dans les oeillets 26 qui sont soudés sur les extrémités inférieures des parties supérieures 8 et 9. Les parties inférieures 64 et 65 sont constituées par des tubes dont les extrémités inférieures sont recourbées l'une vers l'autre. La portion recourbée de la partie inférieure 64 est nettement plus courte que la portion recourbée de la partie inférieure 65, mais sur la partie recourbée de la partie inférieure 64 sont soudés deux flasques 66 entre lesquels se loge la

- 20 -

partie recourbée de la partie inférieure 65.

Dans chacun des flasques 66 sont pratiquées trois ouvertures 68. Ces dernières se situent en face les unes des autres dans les deux flasques 66. Dans la partie recourbée de la partie inférieure 65 est pratiquée une ouverture. Cette dernière peut être amenée en face d'une paire d'ouvertures dans les flasques 66, de telle sorte qu'alors un boulon 67 puisse être enfilé dans les ouvertures se faisant face des flasques 66 et l'ouverture de la partie inférieure 65. Le boulon rencontre avec sa tête là face extérieure d'un flasque 66 et porte contre la face extérieure de l'autre flasque 66, un écrou. Le boulon 67 forme donc une goupille d'articulation pour les parties inférieures 64 et 65, qui sont ajustables entre elles, étant donné que trois paires d'ouvertures sont pratiquées dans les flasques 66. Ceci permet de régler l'espacement entre les portions droites des parties inférieures 64 et 65 dans l'état fermé du carcan.

L'un des flasques 66 porte en bas un oeillet 14 qui est relié, par l'intermédiaire de la chaîne 15, à un oeillet 16 encastré dans le sol.

La goupille 35 qui forme l'axe d'articulation mutuelle des parties supérieures 8 et 9 et qui est fixe sur la plaque de support 41, fait saillie dans la forme de réalisation suivant les figures 15 à 20 bien plus loin au-delà du flasque 36 que ce n'est le cas dans la forme de réalisation suivant les figures 1 à 11. Sur cette partie en saillie de la goupille 35 peut coulisser en va-et-vient une petite douille 76. Cette dernière porte un plaquette 75 qui s'étend dans un plan vertical perpendiculaire au plan de carcan. Cette plaquette 75 est engagée par une plaquette parallèle 74. Celle-ci s'étend donc également dans un plan vertical perpendiculaire au plan de carcan et en fait suivant le plan de symétrie du dispositif qui est perpendiculaire au plan de carcan.

- 21 -

Dans les plaquettes 74 et 75 sont pratiquées des ouvertures pour un boulon 77 qui forme un axe d'articulation pour la plaquette 74 par rapport à la plaquette 75. Le boulon 77 engage par sa tête la plaquette 74 et porte un écrou contre la plaquette 75. La plaquette 74 est solidaire d'une plaque métallique recourbée 70 qui appartient à un butoir 69 qui commande la fermeture et l'ouverture du carcan. Ce butoir est constitué par la plaque métallique recourbée 70 précitée et une pièce de caoutchouc 71 qui est fixée à la plaque au moyen de boulons 72 et d'écrous 73. Comme il ressort principalement des figures 18 et 19, en position d'ouverture du carcan,la pièce 71 se situe en bas et dans cette position ouverte le butoir 69 ferme l'ouverture entre les branches de carcan, surtout entre les parties supérieures de celles-ci.

La plaque métallique 70 du butoir 69 est reliée par une liaison mécanique qui sera décrite plus en détails ci-après, à chacune des parties supérieures 8 et 9 des branches de carcan. Le butoir 69 forme donc un organe de commande pour les branches de carcan. Dans ce but, la plaque métallique 70 porte une seconde plaquette 79 perpendiculaire à la plaquette 74. A côté de la plaquette 79 se situent les portions planes 82 et 83 qui forment les extrémités de tiges 84 et 85 dont les extrémités opposées aux portions planes 82 et 83, sont dotées d'un pas de vis.

La plaquette 79 et les parties planes 82 et 83 sont reliées de façon articulée par un boulon 80 qui forme une goupille d'articulation. Le boulon engage par sa tête la portion plane 82 de la tige 84 et est maintenu en position par un écrou 81 qui engage la surface opposée aux portions planes 82 et 83, de la plaquette 79.

La partie filetée de la tige 84 est vissée dans un écrou 86 qui est solidaire d'un petit tube 88 qui est à son tour solidaire d'une lame 92 d'une articulation 90 avec un axe d'articulation 94. La seconde lame 96 de cette articulation 90 se situe autour d'une goupille 98 qui est fixée sur un flasque 100 qui est à son tour soudé sur la pièce 47 qui est solidaire de la partie supérieure 8 d'une branche de carcan. La lame 96 de l'articulation 90 est maintenue en place autour de la goupille 98 entre des écrous 102.

La portion filetée de la tige 85 est vissée dans un écrou 87 qui est solidaire d'un petit tube 89 qui est à son tour solidaire d'une lame 93 d'une articulation 91 avec un axe d'articulation 95. La seconde lame 97 de cette articulation 91 se trouve autour d'un boulon 99 qui est lui-même monté dans l'une des ouvertures 101 pratiquées dans ce but dans le flasque 36 qui, comme décrit ci-avant, est solidaire de la partie supérieure 9 d'une branche de carcan. La lame 97 de l'articulation 91 est maintenue en place autour du boulon 99 formant goupille d'articulation entre des écrous 103. L'un de ces derniers maintient à son tour le boulon 99 fixé dans une ouverture 101 sur le flasque 36 qu'engage aussi la tête 104 du boulon 99.

Le butoir ou organe de commande 69 s'articule autour de l'axe formé par le boulon 77 qui reste toujours parallèle au plan de carcan, entre une première position basse illustrée aux figures 18 et 19, dans laquelle il maintient les parties supérieures 8 et 9 écartées l'une de l'autre et ferme partiellement l'espace entre les parties supérieures 8 et 9, et une seconde position haute illustrée aux figures 15 à 17, dans laquelle il maintient les parties supérieures 8 et 9 dans la position mutuellement parallèle, donc en position de fermeture de carcan.

Le boulon 77 qui est parallèle au plan de carcan et par rapport auquel s'articule l'organe de commande, est fixé dans la plaquette 75 qui est elle-même solidaire de la petite douille 76 qui peut coulisser alternativement sur la goupille 35 qui forme l'axe d'articulation des parties supérieures 8 et 9. Autour de la goupille 35

- 23 -

s'articulent en effet directement la partie supérieure 8 et les flasques 36 et 37 qui sont solidaires de la partie supérieure 9. Dans le flasque 100 précité solidaire de la partie supérieure 8 est également pratiquée une ouverture pour le passage de la goupille 35.

Il ressort de la description ci-dessus que la plaque 70 de l'organe de commande 69 est reliée, d'une part, à la goupille 98 du flasque 100 solidaire de la partie supérieure 8 et, d'autre part, au boulon 99 monté dans le flasque 36 solidaire de la partie supérieure 9. La liaison mécanique décrite ci-dessus relie donc l'organe de commande 69 aux flasques 100 et 36 qui prolongent les parties supérieures 8 et 9 au-delà de leur axe d'articulation mutuelle 35. Ces flasques 100 et 36 forment des prolongements des parties supérieures 8 et 9 qui, à l'état de fermeture du carcan, s'étendent jusqu'au-delà de l'autre partie supérieure 9 et 8, ce qui ressort principalement des figures 16 et 20.

La tige 85 et le petit tube 89 peuvent en fait être considérés comme une seule tige constituée de deux éléments 85 et 89 situés dans le prolongement l'un de l'autre et pouvant être amenés à tourner l'un par rapport à l'autre autour de leur axe géométrique commun. Il en est en fait de même pour la tige 84 et le petit tube 88. L'un de ces éléments 84 ou 85 respectivement, s'articule alors autour d'un boulon formant axe 80, qui est fixe par rapport à l'organe de commande 69 et se situe dans un plan perpendiculaire au plan de carcan et contenant l'axe d'articulation mutuelle des parties supérieures 8 et 9. L'autre de ces deux éléments, à savoir le petit tube 88 ou 89 respectivement, s'articule alors autour d'un axe 94 ou 95 respectivement, perpendiculaire à l'élément précité, par rapport à une pièce 96 ou 97, respectivement, qui s'articule à son tour autour d'une goupille 98 ou 99 respectivement, qui est perpendiculaire au plan de carcan et est solidaire d'une

- 24 -

partie de prolongement 100 ou 36 respectivement, d'une des parties supérieures 8 ou 9 respectivement. Comme décrit précédemment, le boulon formant goupille 99 est ajustable par rapport au flasque 36 qui forme la partie de prolongement de la partie supérieure 9.

Quand le butoir 69 remonte à partir de la position suivant les figures 18 et 19 vers celle suivant les figures 15 à 17, la liaison mécanique décrite ci-avant a pour résultat que les flasques 36 et 100 sont repoussés vers le haut autour de l'axe d'articulation 35, ce qui a aussi pour conséquence que les parties supérieures 8 et 9 des branches de carcan sont rapprochées l'une de l'autre jusqu'à ce qu'elles atteignent leur position verticale et que le flasque 36 rencontre la partie horizontale d'une pièce 47. Dès qu'au cours de ce déplacement des parties supérieures 8 et 9, la ligne de centre du ressort 44 est parvenue en dessous de la ligne de centre de l'axe d'articulation 35, ce ressort 44 contribue à amener les parties supérieures vers leur position de fermeture, comme décrit ci-dessus à propos de la forme de réalisation suivant les figures 1 à 11.

Dans cette position de fermeture, une saillie 107 du corps principal 54 du verrou parvient en dessous d'une saillie 105 de la plaque 70 de l'organe de commande 69. Autour de la saillie 105 est situé un petit cylindre 108. Si l'animal devait essayer, en position de fermeture, d'écarter les branches 8 et 64, d'une part, et 9 et 65, d'autre part, ceci s'accompagnerait d'un déplacement vers le bas de l'organe de commande 69, ce qui est empêché parce que le verrou avec la saillie 107 du corps principal 54 se trouve dans le parcours du mouvement descendant de la saillie 105 de la plaque 70.

Lorsque cependant on tire à la main vers le bas l'organe de commande 69 de la position suivant les figures 15 à 17 vers celle suivant les figures 18 et 19, le petit

- 25 -

cylindre 108 de la saillie 105 de la plaque 70 exerce une poussée suffisante sur la saillie 107 du corps principal 54 du verrou pour faire pivoter ce dernier dans le sens de la flèche 109 et permettre la poursuite du déplacement vers le bas de l'organe de commande 69. Ceci est facilité par le fait que la portion de la saillie 107 recontrée par le petit cylindre 108 est inclinée. Lors de ce déplacement vers le bas de l'organe de commande 69 et sous l'influence de la liaison mécanique décrite ci-dessus,les flasques 36 et 100 sont tirés vers le bas en un mouvement tournant autour de l'axe d'articulation 35, ce qui écarte à nouveau les parties supérieures 8 et 9 des branches de carcan. Lors de ce mouvement d'ouverture aussi, le ressort 44 apporte sa contribution dès que la ligne de centre du ressort 44 est parvenue au-dessus de la ligne de centre de la goupille 35 qui forme l'axe d'articulation des parties supérieures 8 et 9.

Dans le flasque 36 sont pratiquées plusieurs ouvertures 101 afin de pouvoir adapter la transmission mécanique, par déplacement du boulon 99 d'une ouverture 101 à une autre, à l'adaptation en largeur du carcan qui a lieu en déplaçant la goupille 35 d'une ouverture 62 à une autre,comme décrit ci-dessus à propos de la forme de réalisation suivant les figures 1 à 11.

Etant donné que le flasque 100 qui est fixe par rapport à la partie supérieure 8, se situe à côté du flasque 36 qui est fixe par rapport à la partie supérieure 9, la goupille fendue 38 peut être éliminée dans la forme de réalisation suivant les figures 15 à 20.

Etant donné que dans la forme de réalisation suivant les figures 15 à 20, l'ouverture du carcan est effectuée en tirant vers le bas l'organe de commande 69, la partie du corps principal 54 du verrou en dessous du boulon 56 formant goupille d'articulation peut disparaître, de même la poignée 27 sur la partie supérieure 8 peut faire défaut

- 26 -

et l'appui-pouce 55 peut aussi être éliminé. Il en est en fait de même pour la poignée 40 et l'organe de commande 58-59-60.

L'invention n'est en aucune façon limitée aux formes de réalisation décrites ci-avant et dans le cadre de la demande de brevet, de nombreuses modifications peuvent être apportées aux formes de réalisation décrites, notamment en ce qui concerne la forme, la composition, l'agencement et le nombre des éléments qui sont utilisés pour la réalisation de l'invention.

Les chaînes ne doivent pas nécessairement être reliées directement aux parties supérieures distinctes des branches de carcan. Une ou deux chaînes peuvent aussi porter un petit étrier dans lequel l'axe d'articulation d'une des parties supérieures par rapport à l'autre est suspendu.

0098673

- 27 -

REVENDICATIONS

1. Dispositif pour attacher un animal avec :
- un élément de suspension (34) à suspendre au sommet à une structure fixe (2),
- deux branches (4-22-6-8/64-8 et 5-23-7-9/65-9) qui sont suspendues à l'élément de suspension (34), forment conjointement un carcan, et sont chacune constituées par :
  - une partie supérieure (8 et 9) qui s'articule dans l'élément de suspension (34) autour d'un axe perpendiculaire au plan de carcan principal,
  et
  - une partie inférieure (4-22-6/64 et 5-23-7/65) qui est reliée par l'intermédiaire d'une première articulation (25-26) à la partie supérieure (8 et 9),
- des liaisons articulées (24-20-14-15-16/14-15-16) qui relient les parties inférieures (4-22-6/64 et 5-23-7/65) à la structure fixe (1),
articulations et liaisons articulées qui permettent un mouvement dans le plan de carcan et en dehors de celui-ci,
- des moyens (44) qui dans une position extrême, maintiennent les parties supérieures (8 et 9) dans une position de fermeture et dans l'autre position extrême, maintiennent les parties supérieures (8 et 9) en une position écartée,
et
- un verrou (54-51) qui verrouille les branches à l'état fermée l'une par rapport à l'autre,
caractérisé en ce que les parties supérieures (8 et 9) sont reliées de façon articulée entre elles au sommet, avec un axe d'articulation (35) perpendiculaire au plan de carcan principal.

2. Dispositif suivant la revendication 1, caractérisé en ce que l'élément de suspension est constitué par des chaînes (34) qui sont reliées directement aux parties supérieures (8 et 9).

3. Dispositif suivant la revendication 2, caractérisé en ce que les chaînes (34) engagent en bas par un maillon s'étendant suivant le plan de carcan principal, un oeillet (28 et 29) qui est fixé sur la partie supérieure (8 et 9) et est perpendiculaire au plan de carcan principal.

4. Dispositif suivant l'une quelconque des revendications précédentes, caractérisé en ce que les parties supérieures (8 et 9) sont reliées entre elles au sommet de façon articulée par un axe d'articulation (35) qui est fixe par rapport à une plaque de support (41) qui est montée de façon ajustable par rapport à l'une des parties supérieures (9) dans laquelle sont pratiquées plusieurs ouvertures pour l'axe d'articulation (35), et les moyens (44) qui dans une position extrême, maintiennent les parties supérieures (8 et 9) à l'état de fermeture et dans l'autre position extrême, maintiennent les parties supérieures (8 et 9) à l'état écarté comprennent un ressort de traction (44) dont une extrémité est reliée à la plaque de support (41) et l'autre extrémité à l'autre partie supérieure (8), ressort de traction (44) dont la ligne de centre dans une position extrême des parties supérieures (8 et 9) se situe au-dessus de l'axe d'articulation (35) et dans l'autre position extrême des parties supérieures (8 et 9) en dessous de l'axe d'articulation (35).

5. Dispositif suivant la revendication 4, caractérisé en ce que la plaque de support (41) et l'autre partie supérieure (8) possèdent chacune une butée (45,50), butées qui se rencontrent mutuellement à l'état ouvert du carcan.

6. Dispositif suivant l'une ou l'autre des revendications 4 et 5, caractérisé en ce que la partie supérieure (9) par rapport à laquelle est montée la

0098673

- 29 -

plaque de support (41) possède une ouverture de plus qu'il n'y a de positions prévues pour l'axe d'articulation (35) et la plaque de support (41) possède en plus de l'axe d'articulation (35), une goupille (42) qui lui est parallèle sur le côté opposé à l'autre partie supérieure (8) à une distance égale à l'espacement entre deux ouvertures.

7. Dispositif suivant la revendication précédente, caractérisé en ce que l'axe (35) s'adapte dans chacune des ouvertures et la goupille (42) qui est parallèle à l'axe (35) a une section transversale nettement inférieure à celle de l'axe (35).

8. Dispositif suivant l'une ou l'autre des revendications 6 et 7, caractérisé en ce que la partie supérieure (9) par rapport à laquelle est montée la plaque de support (41) possède deux flasques (36 et 37), la plaque de support est montée par rapport à l'un de ces flasques (37) avec l'ouverture supplémentaire, et l'autre partie supérieure (8) se situe entre ces flasques (36,37).

9. Dispositif suivant la revendication 8, caractérisé en ce que le flasque (37) sur lequel est montée la plaque de support (41) est nettement plus court que l'autre flasque (36).

10. Dispositif suivant l'une quelconque des revendications 4 à 9, caractérisé en ce que l'autre partie supérieure (8) porte une poignée (27).

11. Dispositif suivant l'une quelconque des revendications 4 à 10, caractérisé en ce que le verrou (54-51) s'articule par rapport à l'autre partie supérieure (8) autour d'un axe (56) dans le plan de carcan, et un ressort (53) pousse le verrou (54-51) sous une partie en saillie (36) de la partie supérieure (9) par rapport à laquelle est montée la plaque de support (41).

12. Dispositif suivant les revendications 9 et 11, caractérisé en ce que la partie en saillie (36) de la partie supérieure (9) par rapport à laquelle est montée la plaque de support (41), est le flasque le plus long (36).

13. Dispositif suivant les revendications 10 et 11, caractérisé en ce que le verrou (54-51) possède un appui-pouce (55) à hauteur de la poignée (27).

14. Dispositif suivant la revendication 11, caractérisé en ce que la partie en saillie (36) porte une poignée (40) et il est prévu un organe de commande (58-59-60) constitué par un manche (58) avec à une extrémité de ce dernier un entonnoir (59) qui s'adapte sur la poignée précitée (40), et une partie en saillie (60) qui peut rencontrer le verrou (54-51) alors que l'entonnoir (59) se trouve autour de la poignée précitée (40).

15. Dispositif suivant l'une quelconque des revendications précédentes, caractérisé en ce que les liaisons articulées (24-20-14-15-16) destinées à relier les parties inférieures (4-22-6 et 5-23-7) à la structure fixe (1) sont constituées par :
- une pièce basse (3) qui forme conjointement avec les branches de carcan (4-22-6-8 et 5-23-7-9), le carcan,
- un lien souple (14-15-16) pour relier la pièce basse (3) à la structure fixe (1),
et
- d'autres articulations (20-24) qui relient la pièce basse (3) aux parties inférieures (4-22-6 et 5-23-7).

16. Dispositif suivant la revendication 15, caractérisé en ce que la pièce basse (3) est un carcan bas et à l'état ouvert du carcan, la partie inférieure (4-22-6 et 5-23-7) s'étend par une portion (22 et 23) vers le bas dans la direction de l'autre branche (5-23-7-9 et 4-22-6-8) jusqu'au-delà d'une portion (24) de l'autre articulation (20-24) qui forme la liaison avec la pièce basse (3).

17. Dispositif suivant la revendication 16, caractérisé en ce que
- la partie inférieure est constituée par :
  - une partie basse (4 et 5) qui est reliée, par l'inter-

0098673

- 31 -

médiaire d'une seconde articulation (20) dont l'axe se situe dans le plan de carcan principal, à la pièce basse (3), et

- une autre partie (6-22 et 7-23) qui forme la partie médiane de la branche et qui est reliée, par l'intermédiaire de la première articulation (25-26), à la partie supérieure (8 et 9) et, par l'intermédiaire d'une troisième articulation (24) dont l'axe est perpendiculaire au plan principal de carcan, à la partie basse (4 et 5), et

- à l'état ouvert du carcan, la partie médiane (6-22 et 7-23) s'étend vers le bas dans la direction de l'autre branche, jusqu'au-delà de la troisième articulation (24).

18. Dispositif suivant la revendication 17, caractérisé en ce que la portion (22 et 23) de la partie médiane (6 et 7) qui s'étend vers le bas au-delà de la troisième articulation (24) et la partie basse (4 et 5) s'engagent l'une autour de l'autre à l'état fermé du carcan.

19. Dispositif suivant l'une quelconque des revendications 15 à 18, caractérisé en ce que la pièce basse (3) est constituée par au moins deux parties (10 et 12) mutuellement ajustables.

20. Dispositif suivant l'une quelconque des revendications 1 à 14, caractérisé en ce que les parties inférieures (64 et 65) sont reliées de façon articulée entre elles dans le bas, avec un axe d'articulation (67) perpendiculaire au plan de carcan principal.

21. Dispositif suivant la revendication 20, caractérisé en ce que l'axe d'articulation (67) est ajustable par rapport à au moins l'une des parties inférieures (64 et 65).

22. Dispositif suivant l'une quelconque des revendications 1 à 14, 20 et 21, caractérisé en ce qu'il possède un organe de commande (69) qui est reliée par une liaison mécanique (79 à 99) aux parties supérieures (8 et 9) et qui s'articule autour d'un axe (77) parallèle au plan de carcan, entre une première position dans laquelle il maintient les parties supérieures (8 et 9) écartées l'une de l'autre par l'intermédiaire de cette liaison mécanique (79 à 99) et ferme partiellement l'espace compris entre les parties supérieures (8 et 9), et une seconde position dans laquelle il maintient les parties supérieures (8 et 9) en une position mutuellement parallèle par l'intermédiaire de cette liaison mécanique (79 à 99).

23. Dispositif suivant la revendication 22, caractérisé en ce que l'axe (77) parallèle au plan de carcan et par rapport auquel s'articule l'organe de commande (69) est solidaire d'une douille (76) qui est montée à coulissement autour de l'axe d'articulation mutuelle (35) des parties supérieures (8 et 9).

24. Dispositif suivant l'une ou l'autre des revendications 22 et 23, caractérisé en ce que la liaison mécanique (79 à 99) relie l'organe de commande (69) à des portions (100 et 36) qui prolongent les parties supérieures jusqu'au-delà de leur axe d'articulation mutuelle (35).

25. Dispositif suivant la revendication 24, caractérisé en ce que les portions prolongées (100 et 36) des parties supérieures (8 et 9) s'étendent à l'état fermé jusqu'au-delà de l'autre partie supérieure (9 et 8).

26. Dispositif suivant la revendication 9 et l'une ou l'autre des revendications 24 et 25, caractérisé en ce que l'une des portions prolongées (36) est le plus long flasque.

27. Dispositif suivant l'une quelconque des revendications 24 à 25, caractérisé en ce que la liaison mécanique (79 à 99) comporte au moins une tige (85-89) constituée par deux éléments (85 et 89) situés dans le prolongement l'un de l'autre et pouvant être amenés à tourner l'un par rapport à l'autre autour de leur axe géométrique commun, l'un de ces éléments (85) s'articule autour d'un axe (80) fixe par rapport à l'organe de commande (69) et se trouvant dans un plan perpendiculaire au plan de carcan et comprenant l'axe d'articulation mutuelle (35) des parties supérieures (8 et 9), et l'autre de ces éléments (89) s'articule autour d'un axe (95) perpendiculaire à cet élément (89), par rapport à une pièce (97) qui est elle-même articulée autour d'une goupille (99) perpendiculaire au plan de carcan et fixe par rapport à l'une des portions prolongées (36) des parties supérieures (9).

28. Dispositif suivant la revendication 27, caractérisé en ce que la liaison mécanique comprend

- une première tige (85-89) constituée par deux éléments (85 et 89) situés dans le prolongement l'un de l'autre et pouvant être amenés à tourner l'un par rapport à l'autre autour de leur axe géométrique commun, l'un de ces éléments (85) s'articulant autour d'un axe (80) fixe par rapport à l'organe de commande (69) et situé dans un plan perpendiculaire au plan de carcan et comportant l'axe d'articulation mutuelle (35) des parties supérieures (8 et 9), et l'autre de ces éléments (89) s'articulant autour d'un axe (95) perpendiculaire à cet élément (89), par rapport à une pièce (97) qui s'articule elle-même autour d'une goupille (99) perpendiculaire au plan de carcan et fixe par rapport à une portion prolongée (36) d'une partie supérieure (9), et

- une seconde tige (84-88) constituée par deux éléments (84 et 88) situés dans le prolongement l'un de l'autre et pouvant être amenés à tourner l'un par rapport à l'autre autour de leur axe géométrique commun, l'un de ces éléments (84) s'articulant autour de l'axe précité (80) fixe par rapport à l'organe de commande (69) et

0098673

- 34 -

situé dans un plan perpendiculaire par rapport au plan de carcan et comportant l'axe d'articulation mutuelle (35) des parties supérieures (8 et 9), et l'autre de ces éléments (88) s'articulant autour d'un axe (94) perpendiculaire à cet élément (88), par rapport à une pièce (96) qui elle-même s'articule autour d'une goupille (98) perpendiculaire au plan de carcan et fixe par rapport à la portion prolongée (100) de l'autre partie supérieure (8).

29. Dispositif suivant la revendication 28, caractérisé en ce que l'une des parties supérieures (9) est ajustable par rapport à l'axe d'articulation mutuelle (35) des deux parties supérieures (8 et 9), et la goupille (99) sur la portion prolongée (36) de cette partie supérieure (9) est ajustable.

30. Dispositif suivant les revendications 9 et 29, caractérisé en ce que la portion prolongée citée en dernier lieu (36) est le plus long flasque.

31. Dispositif suivant l'une quelconque des revendications 22 à 30 , caractérisé en ce que l'organe de commande (69) est constitué par une plaque métallique (70) et une pièce de caoutchouc (71).

32. Dispositif suivant l'une quelconque des revendications 22 à 31, caractérisé en ce que le verrou (57-54-51) est articulé par rapport à une partie supérieure (8) autour d'un axe (56) dans le plan de carcan, et un ressort (53) repousse le verrou (57-54-51) en dessous d'une partie en saillie (105) de l'organe de commande (69).

33. Dispositif suivant la revendication 32, caractérisé en ce qu'autour de la partie en saillie (105) de l'organe de commande (69) est situé un petit cylindre (108).

34. Dispositif suivant l'une ou l'autre des revendications 32 et 33, caractérisé en ce que la partie en saillie (105) de l'organe de commande (69) rencontre une portion inclinée (107) du verrou (54-51).

Fig. 1

0098673

# Fig. 2

# Fig. 3

Fig. 4

**Fig.5**

17.

# Fig.6

Fig. 7

0098673

17

## Fig.8

# Fig.9

17

## Fig.10

## Fig.11

0098673

17

Fig.12

60

59

58

Fig.13

59

60

58

59

60

Fig.14

58

0098673

Fig.15

0098673

17

Fig. 16

Fig. 17

0098673

. 17

## Fig.18

**Fig.19**

Fig. 20